# EUROPEAN PATENT SPECIFICATION

(11) **EP 1 469 233 B1**
(45) Date of publication and mention of the grant of the patent: **12.09.2007**
(21) Application number: 04101502.5
(22) Date of filing: 13.04.2004
(51) Int. Cl.: F16H 57/02, B60K 17/02

(54) **Method for forming a gearbox casing for a plurality of engines for motor vehicles, and casing produced by this method**
Methode zur Herstellung eines Getriebegehäuses für eine Vielzahl von Motoren und ein nach diesem Verfahren hergestelltes Gehaüse
Procédé de fabrication d'un carter de boîte de vitesse pour différents moteurs à combustion interne et carter fabriqué selon ce procédé

(30) Priority: 14.04.2003 IT TO20030289
(43) Date of publication of application: 20.10.2004
(73) Proprietor: FIAT AUTO S.p.A., 10135 Torino (IT)
(72) Inventor: Pastorello, Valter, 10040 Cumiana (IT)
(74) Representative: Jorio, Paolo

(56) References cited:
- US-A- 5 473 808
- US-A- 5 524 508
- US-A- 5 743 156

## Description

The present invention relates to a method for forming a gearbox casing for a plurality of engines for motor vehicles.

As is known, gearbox casings (also commonly known as gearbox "covers" or "housings") are made by pressure die-casting in a corresponding forming mould, which is entirely designed in accordance with the dimensions and shape of the casing to be produced.

These dimensions and shape depend both on the gearing of the gearbox that is to be housed in the casing and on the characteristics of the motor vehicle to which the gearbox is to be fitted. In particular, the casing depends both on the type of engine and on the arrangement and orientation of the engine to which it is to be connected, and it is therefore necessary to fully design and produce an individual dedicated forming mould for each application and for each engine.

However, this entails relatively long periods of time and consequently high costs for the design and production of the whole specific forming mould, to the detriment of the versatility that is normally required in production plants.

In addition to the fact that high costs are incurred for the preparation of the specific forming mould, in the case of motor vehicles for which the daily production volume is relatively low, for example 15 vehicles per day, the costs incurred can generally be recouped only in the long term.

US 5473808 discloses an engine transmission bell housing having an attaching flange portion, in which a plurality of bolt holes is formed to fit a plurality of different engines.

The object of the present invention is to provide a method for forming a gearbox casing for a plurality of engines for motor vehicles that enables the aforesaid problems to be overcome in a simple and economical way.

According to the present invention, a method is provided for forming a gearbox casing for a plurality of engines for motor vehicles, as defined in claim 1.

The present invention also relates to a gearbox casing for a plurality of engines for motor vehicles.

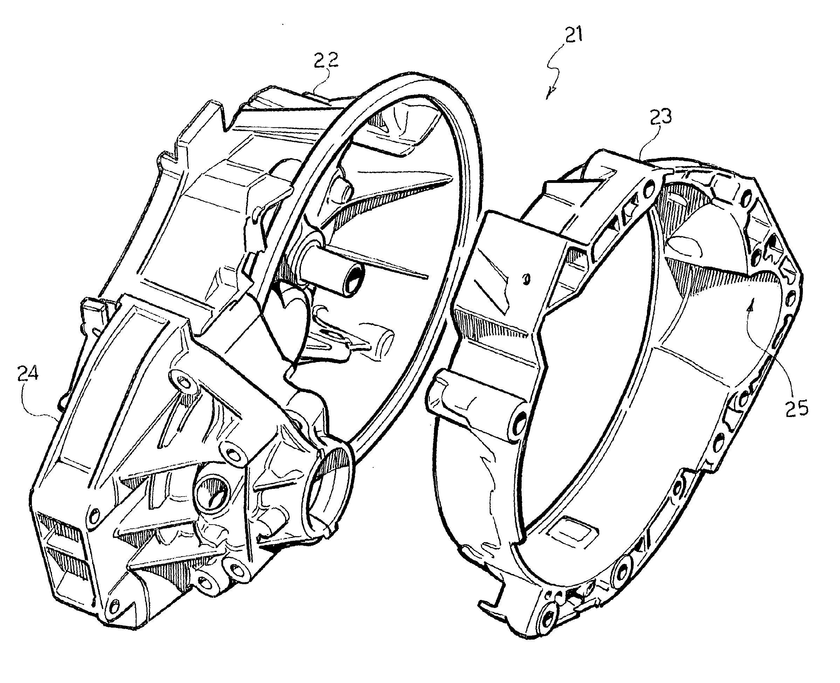

The invention will now be described with reference to the attached figure, which shows in a schematic and partial perspective view a non-restrictive preferred embodiment of the method for forming a gearbox casing for a plurality of engines for motor vehicles according to the present invention.

In the attached figure, the number 21 indicates a casing for a gearbox (not illustrated) of a motor vehicle. The casing 21, also called the "cover" or "housing" of the gearbox, can be fixed to the crankcase of a corresponding motor (not illustrated) in a known way which is not described in detail, and comprises an element 22, which houses the gearing of the gearbox which carries, when in use, a differential 24 of the motor vehicle. The casing 21 also comprises an element 23, which is interposed between the element 22 and the crankcase of the engine to which it is to be connected, is fixed to the said element 22 in a way that is not illustrated in detail, and has a plurality of attachment elements such as holes, studs and reference pins, which enable the element 22 to be coupled to the crankcase.

The elements 22 and 23 are different from each other and are formed separately in corresponding forming moulds (not illustrated), after the identification of the characteristics of a plurality of engines, differing from each other, on which the casing 21 could be mounted.

The term "characteristics of the engines" denotes both the geometric and dimensional characteristics of each engine, and the characteristics of the mounting and orientation of the said engine in the corresponding motor vehicle, making it possible to determine the shape, the geometry and the relative and absolute positions of the attachment devices in the crankcase to which the casing 21 is to be connected.

The element 22 is made in the form of an element common to all the engines on which the casing 21 could be mounted, while the element 23 is formed as a dedicated element, in respect of its geometry and/or dimensions, according to the specific characteristics that have been identified for the engine to which it is to be connected.

In other words, the element 23 forms an adaptor body, an interface or a spacer, which is made in a dedicated mould that can be selected from a plurality of moulds which differ from each other in their geometry and dimensions according to the characteristics identified for the engine in question.

In a preferred embodiment, the making of the element 23 comprises the making of a housing 25 for a starter motor (not illustrated) of the motor vehicle.

It is clear from the above that the casing 21 has a high degree of versatility in terms of the design of casings for new engines or for new applications, and can therefore limit the time and cost requirements for the design, testing and preparation of the production equipment.

This is due to the fact that, for new engines or new applications, a portion of the casing 21 remains common to all the engines, while it is necessary to design only the special mould for forming the single element 23.

Additionally, the element 23 could be supplied to the motor vehicle assembler as a part joined directly to the crankcase of the corresponding engine, while the supplier of the gearboxes would only need to supply identical parts, namely the elements 22, regardless of the engine or motor vehicle in which they were to be installed, with a consequent saving of management and production time and costs.

Finally, it is clear from the above description that the method described with reference to the attached figures can be modified and varied in ways that do not depart from the scope of protection of the present invention.

The geometry and the proportions of the dimensions of the casing 21 could be different from those illustrated by way of example.

## Claims

1. Method for forming a gearbox casing (21) for a plurality of engines for motor vehicles; the casing comprising a housing portion (22) for accommodating the said gearbox, and an attachment portion (23) for connecting the said housing portion (22) to at least one of the said engines; the method being **characterized in that** it comprises the steps of:
- forming the said housing portion (22) which is common to all the said engines;
- identifying the characteristics of each of the said engines;
- forming the said attachment portion (23) according to the identified characteristics of the engine to which the casing (21) is to be connected;
said attachment portion (23) being made as an element separate from the said housing portion (22), to be interposed between the said housing portion (22) and the said engine.

2. Method according to Claim 1, **characterized in that** the operation of making the said attachment portion (23) is carried out in a dedicated mould, which can be selected from a plurality of moulds which differ from each other in their geometry and dimensions according to the identified characteristics of the said engines.

3. Method according to Claim 1 or 2, **characterized in that** the making of the said attachment portion (23) comprises the making of a housing (25) for a starter motor of the said motor vehicle.

## Patentansprüche

1. Verfahren zum Bilden eines Getriebegehäuses (21) für mehrere Motoren für Kraftfahrzeuge, wobei das Gehäuse einen Gehäuseabschnitt (22) zum Unterbringen des Getriebes aufweist, und einen Befestigungsabschnitt (23) zum Verbinden des Gehäuseabschnitts (22) mit mindestens einem der Motoren, wobei das Verfahren **dadurch gekennzeichnet ist, dass** es die folgenden Schritte aufweist:
- Bilden des Gehäuseabschnitts (22), der bei allen Motoren gleich ist,
- Identifizieren der Merkmale jedes der Motoren,
- Bilden des Befestigungsabschnitts (23) gemäß den identifizierten Merkmalen des Motors, an dem das Gehäuse (21) zu befestigen ist,
wobei der Befestigungsabschnitt (23) als ein gesondertes Element von dem Gehäuseabschnitt (22) hergestellt wird, um zwischen dem Gehäuseabschnitt (22) und dem Motor eingefügt zu werden.

2. Verfahren nach Anspruch 1, **dadurch gekennzeichnet, dass** der Vorgang des Herstellens des Befestigungsabschnitts (23) in einer spezifischen Form ausgeführt wird, die aus mehreren Formen ausgewählt werden kann, die sich voneinander in ihrer Geometrie und ihren Maßen je nach den identifizierten Merkmalen der Motoren unterscheiden.

3. Verfahren nach Anspruch 1 oder 2, **dadurch gekennzeichnet, dass** das Herstellen des Befestigungsabschnitts (23) das Herstellen eines Gehäuses (25) für einen Anlasser des Kraftfahrzeugs umfasst.

## Revendications

1. Procédé pour former un boîtier de boîte de vitesses (21) pour une pluralité de moteurs pour des véhicules à moteur ; le boîtier comprenant une partie de logement (22) pour recevoir ladite boîte de vitesses, et une partie de fixation (23) pour relier ladite partie de logement (22) à au moins l'un desdits moteurs ; le procédé étant **caractérisé en ce qu'**il comprend les étapes consistant à :
- former ladite partie de logement (22) qui est commune à tous lesdits moteurs ;
- identifier les caractéristiques de chacun desdits moteurs ;
- former ladite partie de fixation (23) selon les caractéristiques identifiées du moteur auquel le carter (21) doit être connecté ;
ladite partie de fixation (23) étant réalisée en tant qu'élément séparé de la partie de logement (22), pour être interposée entre ladite partie de logement (22) et ledit moteur.

2. Procédé selon la revendication 1, **caractérisé en ce que** l'opération de réalisation de ladite partie de fixation (23) est effectuée dans un moule dédié qui peut être choisi parmi une pluralité de moules qui diffèrent les uns des autres dans leur géométrie et leurs dimensions selon les caractéristiques identifiées desdits moteurs.

3. Procédé selon la revendication 1 ou 2, **caractérisé en ce que** la réalisation de ladite partie de fixation (23) comprend la réalisation d'un logement (25) pour un moteur de démarrage dudit véhicule à moteur.
